# EUROPEAN PATENT SPECIFICATION

(11) **EP 3 362 582 B1**
(45) Date of publication and mention of the grant of the patent: **25.08.2021**
(21) Application number: 16795442.9
(22) Date of filing: 13.09.2016
(51) Int. Cl.: C22B 1/00, C22B 1/02, C22B 7/00, C22B 13/02, C22B 19/30, C22B 41/00, C22B 58/00

(54) **A METHOD FOR PRODUCING A CONCENTRATE CONTAINING METAIS, RARE METALS AND RARE EARTH METALS FROM RESIDUALS GENERATED IN THE ZINC PRODUCTION CHAIN AND CONCENTRATE OBTAINED BY SAID METHOD**
VERFAHREN ZUR HERSTELLUNG EINES KONZENTRATS MIT METALLEN, SELTENEN METALLEN UND SELTENEN ERDMETALLEN AUS RÜCKSTÄNDEN IN DER ZINKPRODUKTIONSKETTE UND MIT DIESEM VERFAHREN ERHALTENES KONZENTRAT
PROCÉDÉ DE FABRICATION D'UN CONCENTRAT CONTENANT DES MÉTAUX, DES MÉTAUX RARES ET DES MÉTAUX DES TERRES RARES À PARTIR DE RÉSIDUS PRODUITS DANS LA CHAÎNE DE PRODUCTION DU ZINC ET CONCENTRAT OBTENU PAR LEDIT PROCÉDÉ

(30) Priority: 14.10.2015 IT UB20154661; 28.10.2015 IT UB20154943
(43) Date of publication of application: 22.08.2018
(73) Proprietor: Ecotec Gestione Impianti S.r.l., 96100 Siracusa (IT)
(72) Inventor: IMERITO, Aldo, 96100 Siracusa SR (IT)
(74) Representative: Santi, Filippo
(86) International application number: PCT/IT2016/000210
(87) International publication number: WO 2017/064735

(56) References cited:
- WO-A1-2005/031014
- WO-A1-2008/052661
- US-A- 4 072 503
- US-A1- 2010 189 637

## Description

"A method for producing a concentrate containing metals, rare metals and rare earth metals from residuals generated in the zinc production chain and concentrate obtained by said method".

The present invention relates to the technical field of the recovery of metals, rare metals and rare earth metals, from residuals produced in the metallic zinc production chain. In particular the present invention relates to the extraction of indium, germanium, silver, zinc, lead, iron and any other metals, rare metals and rare earth metals occurring in residuals, such as, for example, sludges chemically similar to the jarosite and goethite, by transforming into chemical form suitable to be valued in the reference markets.

In the industrial production of metallic zinc, in addition to extract zinc from scrap resulting from the steel production, it is mainly used, as a raw material, zinc blende (or sphalerite), that is, a mineral composed of zinc sulfide. In the mineral matrix there are also contained other elements, in the form of sulfides, which can be separated and sent to the dedicated processing lines: among these, the main ones are lead and silver, as frequently the blende (zinc sulfide based minerals) and argentiferous galena (lead sulfide based minerals) are in the same mineral deposit. According to the presence of so-called minor elements, in the composition of the minerals from which zinc is extracted, may also be present further metals, rare metals and rare earth metals; the sphalerite, for example, is the most common mineral from which indium is extracted, which is present, typically, at concentrations ranging from 70 mg/kg to 200 mg/kg; in some particular cases, this concentration is between 500 mg/kg and 800 mg/kg. In the used mineral, it is finally present iron, in the form of iron sulfide or oxide, but this, from the point of view of the zinc production, is a disturbing element rather than a qualifying factor.

The zinc containing raw material is subjected to a treatment sequence, by thermal, hydrometallurgical and electrochemical means, up to the production of metallic zinc. During this treatment sequence, lead, silver and any minor elements are selectively separated and sent to dedicated processing lines. The iron, however, is separated usually in the form of insoluble salt and handled as a waste. Because of the extraction and separation yields of the different elements, allowed by industrial processes, however in the waste products remain significant concentrations of some of the elements of interest. Indeed it is well known that the industry of the zinc production during the process chain thereof, produces wastes that still have a significant content of zinc and lead containing compounds. In these wastes there are also present additional elements such as indium, germanium, silver and possible other metals, rare metals and rare earth metals, potentially exploitable. These residual metals, finally, contain significant amounts of iron compounds.

Depending on the used processes, such residuals are a blend or a mixture of substances chemically similar to goethite, or to jarosite. Wastes in the form of goethite are iron oxy-hydroxides (FeO • OH). Wastes in the form of jarosite are mixed hydrated sulfates, of the type *MFe*₃(*SO*4)₂(*OH*)₆*,* (wherein M represents: H₃O⁺, Na⁺, K⁺, NH₄⁺, Ag⁺, Li⁺, or 1/2 Pb²⁺, Zn²⁺); There are also present, to a lesser extent, mixed sulfides of these same metals. Usually, in both cases, resulting from wet extraction/separation cycles, these residuals are in the form of shovelable sludge, therefore with a variable content of imbibition water, usually up 35-40% by weight.

Currently, these residuals, due to technical or economic choice, are not handled as by-products but as wastes: therefore they must be stabilized, made inert and conferred in a sanitary landfill. The quantities of these wastes are, usually, between 100.000 and 250.000 tons/year, depending on the production site. These large quantities constitute an environmental problem under different points of view: the residuals must be treated so as to make them suitable to meet the limits of disposability in landfills, and this operation entails, due to the type of material, the addition of solid reactants. It goes well to further increase the amount of material going to occupy the landfill volumes. The depletion of the available landfill volume is a problem for the continuation of the industrial activities: because of the so-called "NIMBY" effect (Not In My Back Yard), not only in Europe and USA, but also in many of the economically emerging powers, landfill disposal is seen as the last option, after having implemented the so-called principle of the 3Rs (Reduce, Reuse, Recycle). As a consequence of this, the obtaining of a concession for new landfill areas is increasingly difficult. On the other hand, the concentration of indium, germanium, silver, zinc, lead, iron and any other metals, rare metals and rare earth metals, in these residuals, is such that every year, with landfill disposal, are lost materials for a potential enhancement, for each manufacturing site, of tens of millions of euro.

The chemical form of jarosite or goethite, according to which these residuals occur, does not allow a simple extraction of the potentially exploitable elements, however, because of just reported economic and environmental factors, the industrial world is pushing on the research to find technically and economically viable solutions, to be used to realize the further extraction of the metals (or compounds thereof) and to find alternatives to landfill.

The research lines in the literature involve extraction processes based on hydrometallurgy, possibly associated with processes of pyrometallurgical type. In many of these processes, however, indium, germanium, and possible other rare metals and rare earth metals, because of concentration or chemical form thereof, however, are not extracted during recovery processes of silver, zinc, lead and, possibly, iron compounds. Therefore, even with a re-processing of the wastes produced by the zinc production chain, these high value-added elements should still lost.

US 2010/0189637 A1 describes a method for treating residues comprising zinc ferrites and non-ferrous metals selected from among the group made up of lead, silver, indium, germanium and gallium or mixtures thereof in the form of oxides and sulfates. This method does not provide an extra heating step for removing crystalline water from leach residues before a step of removing sulphur.

The needs to reduce or eliminate the quantity of jarositic and/or goethitic inert made sludge to be sent to landfills, to have an alternative method that transforms indium, germanium, silver, zinc, lead, iron and possible other metals, rare metals and rare earth metals occurring in these sludge into recoverable and exploitable compounds are simultaneously satisfied by the method according to the present invention that provides, in addition, further advantages which will become apparent hereinafter.

The object of the invention, i.e. the subject matter of the invention, is realized by the method defined in the appended claims.

It is therefore the object of the present invention a method based, as a whole, on the simultaneous concentration and extraction, by a thermal route (by transforming the same into chemical form of oxides, sulfides or a mixture of these compounds), of indium, germanium, zinc, lead and silver, and possible other rare metals and rare earth metals occurring in the residuals generated by the zinc production chain, such as, for example, jarositic and/or goethitic sludges and/or mixed sludges from the zinc extraction processes by means of direct leaching.

At the same time, the method allows the extraction of iron in the form of metallic iron, with chemical composition ranging from stainless steel to cast iron. According to the application thereof to jarositic sludges or mixed sludges produced by the extraction of zinc by means of direct leaching, finally, the method allows sulfur compounds to be extracted in the form of SOx and, if appropriate, to use the same for the production of sulfuric acid.

In such a method, the operations leading to concentrate indium, germanium, silver, zinc, lead, iron and possible other metals, rare metals and rare earth metals in jarositic, goethitic sludges and mixed sludges resulting from zinc extraction processes by direct leaching, are:
- (If any) pre-drying at a temperature between 80°C and 200°C;
- loading of the material, obtained in the previous step, in a suitable closed reactor, such as rotary kiln or microwave kiln, and heat treatment up to a temperature of 1350°C, in the presence of a carrier gas suitable to create a neutral or oxidizing environment;
- using of a carrier gas, preferably selected from nitrogen, air, oxygen or mixture thereof;
- the method of thermal treatment up to 1350°C in a closed reactor can be carried out in "continuous", "semi-batch" or "batch." mode

According to the invention, the closed reactor is divided into a first section suitable to ensure temperatures up to 510°C and one or more successive sections, suitable to assure temperatures up to 1350°C.

According to the invention, the gaseous flow coming out from the sections up to 510°C, mainly composed of water in gas phase, is conveyed to an heat recovery and condensation system; the exiting gas flow from subsequent sections up to 1350°C, when the treated material contains jarosite or mixed sludges from the direct leaching, is conveyed to a sulfuric acid production system.

At the end of these thermal pre-treatments, an increase of the concentration of indium, germanium, zinc, lead, silver, and possible rare metals and rare earth metals is obtained; however, the matrix in which these elements are contained is not yet suitable to promote an effective and efficient separation thereof, particularly due to the iron oxide content.

To separate the elements of interest from the iron oxides, the material obtained after the treatment up to 1350°C is subjected to a carbon reduction reaction, at average temperatures of the reactor ranging from 1000°C to 1850°C. The reactor wherein this carbon reduction reaction is carried out may be, but not limited to, a microwave generated plasma reactor, a transferred arc thermal plasma reactor, a non transferred arc thermal plasma reactor, a mixed thermal plasma reactor (transferred arc and non-transferred arc), a reactor of the EAF type, an induction reactor.

The material obtained after the treatment up to 1350°C, to be submitted to the carbon reduction reaction, is optionally ground in order to have the optimal particle size; subsequently this material is supplemented with one or more carbon containing reagents. There are, in the technique of this specific field, several possible ways to define the amount of carbon to be added to the material treated up to 1350°C: according the described method, the amount of added carbon (regardless of the type of reagent used) is from 1.1 and 3 times the stoichiometric value of the iron oxides, expressed as Fe₂O₃, occurring in the material obtained by the treatment up to 1350°C. By way of example and not of limitation, the carbon is added in the form of vegetable coal, carbon coke, residuals from the processing of petroleum or derivatives thereof, plastic containing residuals, or mixtures thereof. In a particular embodiment of the described method, a further contribution to the formation of a reducing environment is given by the use, concurrently to the above described reagents, of one or more reagents in a gaseous physical state, containing carbon and hydrogen, such as, for example, methane. If necessary, the material obtained after the treatment up to 1350°C and to be submitted to a carbon reduction reaction at reactor average temperatures ranging from 1000°C to 1850°C, is added a melting and basicity index corrector agent; this parameter, in a given material, represents the ratio of the calcium and magnesium contents expressed as CaO and MgO to the silicon and aluminium contents, expressed as SiO₂ and Al₂O₃ i.e. (CaO+MgO)/(SiO₂+Al₂O₃). According to the present invention, the possible addition of calcium is carried out using one or more compounds containing calcium oxide, or calcium carbonate, in the form of industrial reagents or supplied from optionally waste carbonate mineral, as the dust of marble, or a mixture thereof.

Once the feed for the carbon reduction reaction, consisting of the material previously treated up to 1350°C, reducing agent and possibly the melting and basicity index corrector agent has been prepared, the same is introduced into a dedicated reactor, which operates, under steady state conditions, at an average temperature from 1000°C to 1850°C.

During the carbon reduction process, compounds containing indium, germanium, silver, zinc, lead and other possible rare metals and rare earth metals are transformed in volatile chemical form and extracted from the matrix, moving them away from the reactor by suction through the duct leading to the off gas treatment section. Together with these compounds, also sulfur compounds, if present in the matrix fed to the reactor, are conveyed in the gas phase. Along the off gas treatment section systems for the physical/mechanical separation of dusts from the gaseous flow are positioned.

The compounds transformed in a volatile chemical form containing indium, germanium, silver, zinc, lead and other possible rare metals and rare earth metals, transported in the gaseous flow, are again transformed into solid particulate or powder, by a combination of lowering of the temperature and, possibly, addition of an oxygen containing gas.

The separation of the solid particulate or powders may be achieved by the use of mechanical (for example cyclones and separation chambers), electrostatic (for example electrostatic filter), filtering septum (physical filters of suitable porosity) separation systems or wet separation (for example wet scrubbers) also in combination therebetween. The obtained solid particulate as whole is a concentrate enriched in indium, germanium, silver, zinc, lead and other possible rare metals and rare earth metals, in the chemical form of oxides or sulfides or mixtures of oxides and sulfides.

During the carbon reduction reaction, simultaneously to the phenomena resulting in the removal of indium, germanium, silver, zinc, lead and other possible rare metals and rare earth metals, transported in the gaseous flow, additional phenomena occur: the occurring iron oxides undergo to a chemical reduction, resulting in liquid metallic iron, which separates from the remaining liquid matrix and stratifies in the lower part of the reactor. In addition, the remaining occurring compounds, based on aluminosilicates, stratify in liquid form in the upper part of the reactor. In a preferred embodiment of the method, these last two phenomena are brought to completion in a secondary reactor, always maintained at a temperature between 1000°C and 1850°C, in which the materials in the liquid state are transferred, at the end of the development of volatile compounds containing indium, germanium, silver, zinc, lead and other possible rare metals and rare earth metals.

The stratified iron is removed from the reactor by pouring from a dedicated exhausts of the primary or secondary reactor, when used. Similarly, the molten aluminosilicates, operatively defined slag, are removed from the reactor by pouring from a dedicated exhausts of the primary or secondary reactor, when used. The cooling mode of the poured slag is chosen based on the final solid structure to be obtained, i.e. amorphous (vitrified) or crystalline (ceramized).

In summary, at the end of carbon reduction process three types of products are obtained:
A. concentrate of powders enriched in indium, germanium, silver, zinc and lead in the form of oxides, sulfides or mixture of oxides and sulfides;
B. metallic iron, with chemical composition from cast iron to alloy steel;
C. inert vitrified/ceramized slag, based on aluminosilicates;

The product (A) has the chemical form suitable to be sent back to the extraction processes of indium, zinc, lead, silver and other exploitable elements.

The metallic iron (B), with the chemical composition from cast iron to alloy steel, is characterized and sent to the reference market, based on the obtained quality.

The slag (C) is characterized and sent to the reference market, based on the obtained quality.

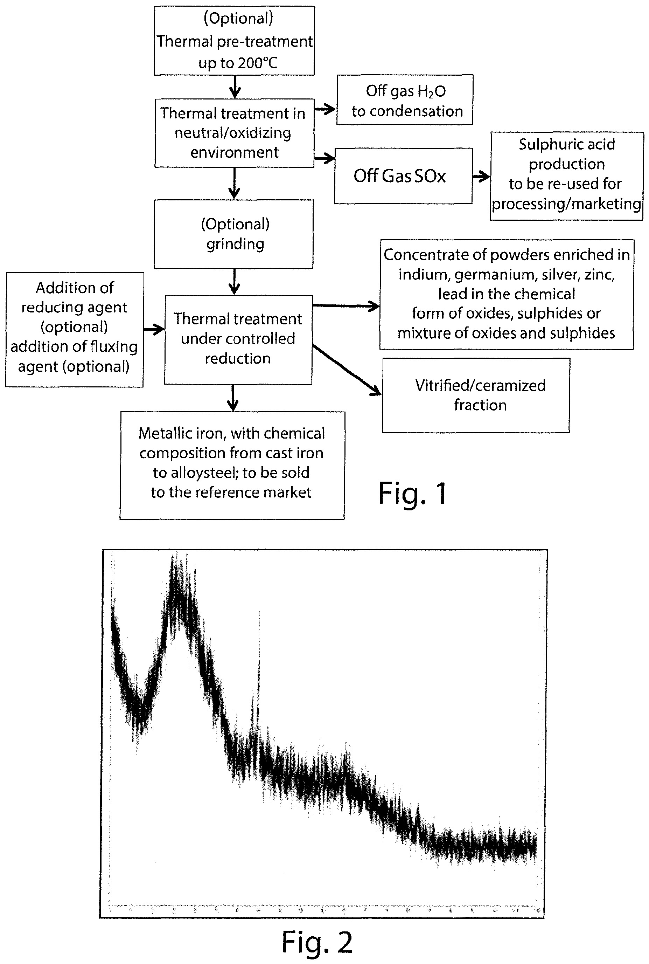

It is reported until now a general type description of the invention. With the help of Figure 1, and Example 1, now will be reported a more detailed description of an embodiment thereof, aimed to achieve a better understanding of the method, objects, features and advantages thereof.
Figure 1 is a simplified and qualitative block diagram of one embodiment of the method according to the invention.
Figure 2 shows the X-ray diffractogram of the inert slag based on aluminosilicates, obtained in the embodiment of the method, described in Example 1.

### EXAMPLE 1

In this example jarositic sludges have been used, whose average composition is illustrated in the following Table 1:

**Table 1**

| **Parameter** | **Value** | **U.M.** |
|---|---|---|
| **Al** | 0.70 | % |
| **Ca** | 1.3 | % |
| **Cd** | 0.07 | % |
| **Cu** | 0.35 | % |
| **Fe** | 30.1 | % |
| **Mg** | 0.71 | % |
| **Pb** | 4.4 | % |
| **S total** | 10.0 | % |
| **SiO₂** | 2,6 | % |
| **Zn** | 8.8 | % |
| **% H₂O** | 34.00 | % |

In the composition of jarositic sludges, reported in Table 1, there are not reported indium, germanium, silver and other elements, as in this step the same are present at relatively low concentrations.

The subsequent described steps are intended to concentrate the indium, germanium, silver, zinc and lead, included in the matrix of hydrated sulfates, typical for these jarositic sludges, and to transform the same into a chemical form suitable to be treated in plant lines that normally treat the mineral or raw material the zinc is extracted from, i.e., oxides, sulfides or a mixture of oxides and sulfides.

An aliquot of jarositic sludge sample was dried at 110°C to remove imbibition water; from the thus obtained material, 500 grams of sample were withdrawn, which were treated in a rotary kiln, but, alternatively, a microwave kiln can be used, at a controlled temperature, so as to selectively remove the crystallization water and sulfur compounds.

The step subsequent to drying at 110°C involves to treat the material in a temperature range from 110°C to 510°C. This step results in the de-hydroxylation of jarosite sludges, with water development in gas phase. The gaseous flow thus developed is conveyed, re-condensed and collected. In technical terms, this step coincides with the elimination of crystallization water. The drying and the elimination of crystallization water were carried out separately, with the sole purpose of experimentally define these two steps of the method but they can be carried out simultaneously, in a temperature range from room temperature to 510°C.

The next step of the heat treatment covers a range of temperatures which can range from 510°C to 1350°C. In this range of temperatures, the sulfates occurring in the jarositic sludges decompose with gas phase SOx evolution and the compounds remaining in the solid are converted into oxides. The thus developed gaseous flow is conveyed to capture systems for the analysis and sent to a plant for sulfuric acid production.

In the described example, the temperature range used in this second step is between 510°C and 1000°C: considering the composition of the used sample, not all of the occurring sulfates decompose in this temperature range, therefore it is expected to detect a content of residual sulfur in the material at the end of treatment. In the following Table 2 the elemental analyses of the jarosite dried at 110°C and the material treated at 1000°C are reported:

**Table 2**

| | | **Jarosite at 110°C** | **Jarosite treated at 1000°C** |
|---|---|---|---|
| **Parameter** | **U.M.** | **Found values** | **Found values s** |
| Ag | mg/Kg | 207 | 242 |
| Al | mg/Kg | 6884 | 8139 |
| AS | mg/Kg | 7789 | 18230 |
| Ba | mg/Kg | 6148 | 9485 |
| Ca | mg/Kg | 12723 | 7634 |
| Cd | mg/Kg | 577 | 716 |
| Co | mg/Kg | 12 | 23 |
| Cr | mg/Kg | 332 | 727 |
| Cu | mg/Kg | 3407 | 3999 |
| Fe | mg/Kg | 300711 | 363041 |
| Gd | mg/Kg | 46 | 58 |
| In | mg/Kg | 256 | 297 |
| K | mg/Kg | 3153 | 3156 |
| Mg | mg/Kg | 3583 | 1168 |
| Mn | mg/Kg | 5783 | 8482 |
| Mo | mg/Kg | 57 | 117 |
| Nb | mg/Kg | 360 | 144 |
| Nl | mg/Kg | 31 | 344 |
| Pb | mg/Kg | 43946 | 52334 |
| S | mg/Kg | 100332 | 63096 |
| Se | mg/Kg | 46 | 17 |
| Si | mg/Kg | 25677 | 25872 |
| Ti | mg/Kg | 797 | 786 |
| Zn | mg/Kg | 87610 | 106740 |
| Zr | mg/Kg | 31 | 78 |

It can be noted how a first concentration of indium is obtained, with respect to the untreated sludge which is similar to that typical occurring in sphalerite.

The material obtained after the treatment at 1000°C is used to prepare the feed to the next treatment section. In order to extract from the material indium, germanium, silver, zinc and lead in the form of oxides, sulfides or mixture of oxides and sulfides, a strong reducing reaction at high temperature is carried out. For the realization of the reducing conditions it is used a reactor with a transferred arc plasma, which allows to use, as a carbon source for the reduction, in addition to the traditional reagents, also waste or scrap with a high carbon content. The feed for the reactor with a transferred arc plasma was formed by mixing the material treated at 1000°C, carbon and calcium carbonate. At the end of the treatment in the transferred arc plasma reactor, are obtained three types of products:
- mix of powders enriched in indium, germanium, silver, zinc and lead in the form of oxides, sulfides or mixture of oxides and sulfides;
- metallic iron, with the chemical composition from cast iron to alloy steel;
- inert vitrified/ceramized slag, based on aluminosilicates;

In the following Table 3 are shown the main elements that make up the powder mix.

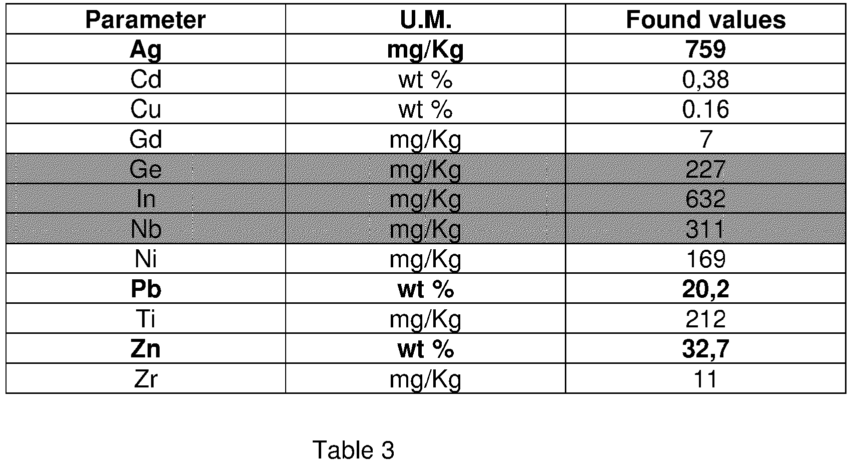

It can be seen as result from the treatments, that the indium concentration is comparable to the that found in high concentration sphalerite of this element. In addition, elements such as germanium and niobium, which in the previous steps were not at significant concentration, are present in the mixture of powders at very high concentrations.

A significant concentration effect is also found for silver, as well as for lead and zinc.

The analyses by XRD (X ray diffraction) and SEM-EDXS electron microscopy confirm that the powders are composed predominantly of a mixture of oxides and sulfides of the main elements indicated in the table. The concentrations obtained for these elements, together with the chemical form thereof (mixture of oxides and sulfides), make this material suitable to be sent back to the extraction treatment of zinc and other elements, together with the commonly used raw materials (for example sphalerite mineral).

In the following Table 4 the characterization analyses of the slag obtained in this example are indicated: in this case it is chosen to use the cooling conditions suitable to a vitrified product.

**Table 4**

| **Paramter** | **U.M.** | **Found values** |
|---|---|---|
| Si | mg/Kg | 261576 |
| Na | mg/Kg | 119306 |
| Fe | mg/Kg | 108712 |
| Al | mg/Kg | 80667 |
| Ca | mg/Kg | 47397 |
| K | mg/Kg | 10666 |
| Ti | mg/Kg | 6970 |
| Ba | mg/Kg | 5137 |
| Mn | mg/Kg | 4789 |
| Mg | mg/Kg | 1563 |

The matrix obtained is actually vitrified, as confirmed by XRD (X ray diffraction) analysis: the instrument detects a totally amorphous matrix, as shown in Figure 2.

By changing the cooling conditions of this melt, it is possible to obtain a ceramized slag (i.e. with a crystalline organization of the matrix), with the same chemical composition. In both cases, the resulting material is a secondary raw material with an intrinsic commercial value and a reference market.

## Claims

1. A method for thermally producing a solid concentrate - substantially iron free - enriched in its contents of indium, germanium, zinc, silver, lead and optionally other metals, starting from residual materials produced by the zinc production chain, such as jarosite and/or goethite sludges and/or mixed sludges deriving from the zinc extraction processes by direct leaching, with the contemporaneous production of an alloy of iron with a chemical composition from cast iron to alloy steel and of an inert product with a physical structure from vitrified amorphous to crystallized ceramic, wherein the residual material to be treated is subjected to the following operations:
- optional drying at a temperature comprised between 80°C and 200ºC;
- heating of the material, optionally dried, at a temperature comprised in the range of 110-510ºC in closed kiln, with emission from the kiln of an aeriform flow prevalently composed of water;
- further heating, at a temperature lower or equal to 1350ºC, with an increase in concentration and in chemical form of oxides, sulphides or of a mixture thereof, of indium, germanium, zinc, silver, lead and optionally other metals, however on a matrix not yet suitable to allow their effective and efficient separation due to the high contents of iron oxides, and with emission from the kiln, when the treated material contains jarosite or mixed sludges deriving from the direct leaching, of a flow of sulphur compounds in SOx form;
- carbon reducing treatment of the resulting product, optionally ground, in a carbon reduction reactor, at temperatures from 1000ºC to 1800ºC, in presence of a carbon amount comprised between 1.1 and 3 times the stoichiometric value of the iron oxides expressed as Fe₂O₃ and optionally of a melting and basicity index corrector agent, intended as a ratio between the calcium and magnesium contents expressed as CaO and MgO and the silicon and aluminium contents, expressed as SiO₂ and Al₂O₃ i.e. (CaO+MgO)/(SiO₂+Al2O₃), with consequent development of compounds of indium, germanium, zinc, silver, lead and optionally of other metals in volatile chemical form;
- transformation of the volatile compounds of metals contained in the off-gas in solid particulate or powders, by lowering of the off-gases temperature and optional addition of a gas which contains oxygen, and by using of an abatement system, the whole of the solid particulate or of the powders being a concentrate - substantially free of iron oxides - enriched in indium, germanium, zinc, silver, lead and optionally other metals in chemical form of oxides or sulphides or mixtures of oxides and sulphides;
- contemporaneous transformation, by effect of the carbon reduction at a high temperature, of the iron oxides in liquid metallic alloy of iron, with a composition from cast iron to alloy steel, which separates from the remaining liquid matrix stratifying in the low part of the reactor, and of the melting and basicity index corrector agent which separates from the remaining liquid matrix stratifying in the high part of the reactor in form of liquid slag based on aluminosilicates;
- collection of the alloy of liquid iron placed below and of the liquid slag placed up by means of dedicated exhausts of the reactor with separation therefore of the alloy of iron and of the amorphous (vitrified) or crystalline (ceramized) inert slag according to the cooling methods of the poured slag;
- sending of the concentrate enriched in indium, germanium, zinc, silver, lead and optionally other metals, in form of oxides and/or sulphides and/or mixtures thereof, to conventional apparatuses for separation of these metals in substantial absence of iron, with their consequent recovery and exploitation;
- sending of the alloy of iron and of the vitrified/ceramized inert slag to the respective markets of reference according to their quality.

2. The method according to claim 1, wherein the other metals to be extracted are rare metals or rare earth metals.

3. The method according to claim 1 or 2, wherein the heating at 110-510ºC and the further heating at a temperature lower or equal to 1350ºC are made in a rotary kiln, or in a microwave kiln.

4. The method according to any claims from 1 to 3, wherein the aeriform flow going out from the kiln, where the optionally dried material has been heated at 110-510ºC, prevalently composed of water in its aeriform state, is conveyed to a system for heat recovery and condensation.

5. The method according to any of the preceding claims, wherein the neutral or oxidizing environment is obtained by a gas chosen from the group comprising nitrogen, oxygen, air and combinations thereof.

6. The method according to any of the preceding claims, wherein the SOx flow coming out from the reactor during heating at a temperature lower or equal to 1350ºC, when the treated material contains jarosite or mixed sludges coming from the direct leaching, is used for the sulphuric acid production.

7. The method according to any of the preceding claims, wherein the reactor for carrying out the carbon reducing treatment is chosen from the group comprising microwave plasma reactor, non-transferred arc thermal plasma reactor, mixed (transferred arc and non-transferred arc) thermal plasma reactor, EAF reactor and induction reactor.

8. The method according to any of the preceding claims, wherein in the carbon reducing treatment it is added carbon in a form chosen from the group comprising vegetal carbon, coke, residues containing plastics, gases containing carbon and hydrogen in their molecule, and mixtures thereof.

9. The method according to claim 8, wherein the gas containing carbon and hydrogen it its molecule is the methane.

10. The method according to any of the preceding claims, wherein the separation systems from the off-gases of the volatile compounds of indium, germanium, zinc, silver, lead and optionally other metals are chosen from the group comprising mechanical systems, electrostatic systems, systems using a filtering septum and wet separation systems.

11. The method according to claim 10 wherein the mechanical systems are cyclones and/or separation chambers, the electrostatic systems are electrostatic filters, the systems using a filtering septum are porous physical filters and the wet systems are wet scrubbers.

12. The method according to any of the preceding claims, wherein separation of the liquid alloy of iron, with a chemical composition from cast iron to alloy steel, and of liquid inert slag is carried out in a secondary reactor.

13. The method according to claims from 1 to 12, wherein the further heating until 1350ºC in closed kiln is continuously carried out, in "semi-batch" or in "batch".

## Patentansprüche

1. Verfahren zur thermischen Herstellung eines festen Konzentrats - im wesentlichen eisenfrei - angereichert in seinen Gehalten an Indium, Germanium, Zink, Silber, Blei und optional anderen Metallen, ausgehend von in der Zinkherstellungskette hergestellten Restmaterialien, wie Jarosit- und/oder Goethit-Schlämme und/oder gemischte Schlämme, die aus den Zinkextraktionsprozessen durch direktes Auslaugen abgeleitet werden, mit der gleichzeitigen Herstellung einer Eisenlegierung mit einer chemischen Zusammensetzung von Gusseisen bis zu legiertem Stahl und eines inerten Produkts mit einer physikalischen Struktur von verglast amorph bis zu kristallisierter Keramik, wobei das zu behandelnde Restmaterial den folgenden Operationen unterzogen wird:
- einem optionalen Trocknen bei einer Temperatur zwischen 80°C und 200°C;
- einem Erhitzen des optional getrockneten Materials bei einer Temperatur im Bereich von 110-510°C in einem geschlossenen Ofen, mit einer aus dem Ofen austretenden luftförmigen Strömung, die überwiegend aus Wasser zusammengesetzt ist;
- einem weiteren Erhitzen bei einer Temperatur kleiner oder gleich 1350°C mit einer Erhöhung einer Konzentration und in chemischer Form von Oxiden, Sulfiden oder einer Mischung daraus, von Indium, Germanium, Zink, Silber, Blei und optional anderen Metallen, jedoch auf einer Matrix, die noch nicht geeignet ist, ihre effektive und effiziente Trennung zu ermöglichen aufgrund des hohen Gehalts an Eisenoxiden, und mit einer aus dem Ofen austretenden Strömung von Schwefelzusammensetzungen in SOx-Form, wenn das behandelte Material Jarosit oder gemischte Schlämme enthält, die aus dem direkten Auslaugen abgeleitet werden;
- einer kohlenstoffreduzierenden Behandlung des resultierenden, optional gemahlenen Produkts in einem Kohlenstoffreduktionsreaktor bei Temperaturen von 1000°C bis 1800°C in Gegenwart einer Kohlenstoffmenge umfassend zwischen dem 1.1 bis 3-fachen des stöchiometrischen Werts der Eisenoxide, ausgedrückt als Fe₂O₃, und optional eines Schmelz- und Basizitätsindex-Korrekturmittels, das als Verhältnis zwischen den Calcium- und Magnesiumgehalten, ausgedrückt als CaO und MgO, und den Silicium- und Aluminiumgehalten, ausgedrückt als SiO₂ und Al₂O₃, d.h. als (CaO+MgO)/(SiO₂+Al₂O₃), vorgesehen ist, mit daraus folgender Entwicklung von Zusammensetzungen von Indium, Germanium, Zink, Silber, Blei und optional anderen Metallen in flüchtiger chemischer Form;
- einer Umwandlung der flüchtigen Zusammensetzungen von Metallen, die in dem Abgas enthalten sind, in feste Teilchen oder Pulver durch Absenken der Abgastemperatur und optional Zugabe eines Gases, das Sauerstoff enthält, und durch Verwendung eines Reduktionssystems, wobei die Gesamtheit der festen Teilchen oder des Pulvers ein Konzentrat ist - im Wesentlichen eisenoxidfrei - und angereichert ist mit Indium, Germanium, Zink, Silber, Blei und optional anderen Metallen in chemischer Form von Oxiden oder Sulfiden oder Mischungen aus Oxiden und Sulfiden;
- einer gleichzeitigen Umwandlung, durch eine Wirkung der Kohlenstoffreduktion bei einer hohen Temperatur, der Eisenoxide in eine flüssige, metallische Eisenlegierung mit einer Zusammensetzung von Gusseisen bis zu legiertem Stahl, welche sich von der verbleibenden flüssigen Matrix, die sich im unteren Teil des Reaktors schichtet, trennt, und des Schmelz- und Basizitätsindex-Korrekturmittels, welches sich von der verbleibenden flüssigen Matrix, die sich im oberen Teil des Reaktors schichtet, in Form von flüssiger Schlacke basierend auf Aluminosilikaten trennt;
- einem Sammeln der sich unterhalb befindlichen Legierung aus flüssigem Eisen und der sich oben befindlichen flüssigen Schlacke mittels dedizierter Auslässe des Reaktors folglich mit einer Trennung der Eisenlegierung und der amorphen (verglasten) oder kristallinen (keramisierten) inerten Schlacke entsprechend den Abkühlmethoden der gegossenen Schlacke;
- einer Weiterleitung des mit Indium, Germanium, Zink, Silber, Blei und optional anderen Metallen in Form von Oxiden und/oder Sulfiden und/oder deren Mischungen angereicherten Konzentrats an herkömmliche Einrichtungen zur Trennung von diesen Metallen bei weitgehender Abwesenheit von Eisen mit deren daraus folgender Rückgewinnung und Verwertung;
- einem Versenden der Eisenlegierung und der verglasten/keramisierten inerten Schlacke zu den jeweiligen Referenzmärkten entsprechend ihrer Qualität.

2. Verfahren nach Anspruch 1, wobei die anderen zu extrahierenden Metalle seltene Metalle oder Seltenerdmetalle sind.

3. Verfahren nach Anspruch 1 oder 2, wobei das Erhitzen auf 110-510°C und das weitere Erhitzen bei einer Temperatur kleiner oder gleich 1350°C in einem Drehofen oder in einem Mikrowellenofen durchgeführt werden.

4. Verfahren nach einem der Ansprüche 1 bis 3, wobei die luftförmige Strömung, die aus dem Ofen austritt, in dem das optional getrocknete Material auf 110-510°C erhitzt wurde, die überwiegend aus Wasser in seinem luftförmigen Zustand zusammengesetzt ist, zu einem System zur Wärmerückgewinnung und Kondensation gefördert wird.

5. Verfahren nach einem der vorstehenden Ansprüche, wobei die neutrale oder oxidierende Umgebung durch ein Gas erhalten wird, das ausgewählt ist aus der Gruppe, umfassend Stickstoff, Sauerstoff, Luft und Kombinationen daraus.

6. Verfahren nach einem der vorstehenden Ansprüche, wobei die SOx-Strömung, die aus dem Reaktor während des Erhitzens bei einer Temperatur kleiner oder gleich 1350°C austritt, wenn das behandelte Material Jarosit oder gemischte Schlämme aus dem direkten Auslaugen enthält, für die Schwefelsäureproduktion verwendet wird.

7. Verfahren nach einem der vorstehenden Ansprüche, wobei der Reaktor zur Durchführung der kohlenstoffreduzierenden Behandlung ausgewählt ist aus der Gruppe, umfassend einen Mikrowellenplasmareaktor, einen thermischen Plasmareaktor mit nicht übertragenem Lichtbogen, einen gemischten thermischen Plasmareaktor (mit übertragenem Lichtbogen und nicht übertragenem Lichtbogen), einen EAF-Reaktor und einen Induktionsreaktor.

8. Verfahren nach einem der vorstehenden Ansprüche, wobei bei der kohlenstoffreduzierenden Behandlung Kohlenstoff in einer Form zugesetzt wird, die ausgewählt ist aus der Gruppe, umfassend pflanzlichen Kohlenstoff, Koks, kunststoffhaltige Reststoffe, Gase, die Kohlenstoff und Wasserstoff in ihrem Molekül enthalten, und Mischungen daraus.

9. Verfahren nach Anspruch 8, wobei das Gas, das Kohlenstoff und Wasserstoff in seinem Molekül enthält, das Methan ist.

10. Verfahren nach einem der vorstehenden Ansprüche, wobei die Trennsysteme von den Abgasen der flüchtigen Zusammensetzungen von Indium, Germanium, Zink, Silber, Blei und optional anderen Metallen ausgewählt sind aus der Gruppe, umfassend mechanische Systeme, elektrostatische Systeme, Systeme, die ein filterndes Septum verwenden, und Nasstrennsysteme.

11. Verfahren nach Anspruch 10, wobei die mechanischen Systeme Zyklone und/oder Trennkammern sind, die elektrostatischen Systeme elektrostatische Filter sind, die Systeme, die ein filterndes Septum verwenden, poröse physikalische Filter sind und die Nasssysteme Nasswäscher sind.

12. Verfahren nach einem der vorstehenden Ansprüche, wobei ein Trennen der flüssigen Eisenlegierung mit einer chemischen Zusammensetzung von Gusseisen bis legiertem Stahl und von flüssiger inerter Schlacke in einem Sekundärreaktor durchgeführt wird.

13. Verfahren nach einem der Ansprüche 1 bis 12, wobei das weitere Erhitzen bis 1350°C in einem geschlossenen Ofen kontinuierlich im "Semi-Batch" oder im "Batch" durchgeführt wird.

## Revendications

1. Procédé pour produire de manière thermique un concentré solide - sensiblement exempt de fer - enrichi en teneurs en indium, germanium, zinc, argent, plomb et, facultativement, en d'autres métaux, à partir de matériaux résiduels produits par la chaîne de production du zinc, tels que des boues jarositique et/ou goethitique et/ou des boues mixtes provenant des procédés d'extraction du zinc par lixiviation directe, avec la production simultanée d'un alliage de fer ayant une composition chimique de la fonte à celle d'un acier allié et d'un produit inerte ayant une structure physique d'une céramique amorphe vitrifiée à celle d'une céramique cristallisée, dans lequel le matériau résiduel à traiter est soumis aux opérations suivantes :
- un séchage facultatif à une température comprise entre 80°C et 200°C ;
- le chauffage du matériau, facultativement séché, à une température comprise dans la plage de 110-510°C dans un four fermé, avec une émission à partir du four d'un flux aériforme composé principalement d'eau ;
- un chauffage supplémentaire, à une température inférieure ou égale à 1 350°C, avec une augmentation de la concentration et sous une forme chimique d'oxydes, de sulfures, ou d'un mélange de ceux-ci, d'indium, de germanium, de zinc, d'argent, de plomb et, facultativement d'autres métaux, toutefois sur une matrice pas encore disponible pour permettre leur séparation effective et efficace due aux teneurs élevées en oxydes de fer et avec à une émission à partir du four, lorsque le matériau traité contient des jarositiques ou mélangées provenant de la lixiviation directe, d'un flux de composés soufrés sous la forme SOx ;
- un traitement de réduction du carbone du produit résultant, facultativement la terre, dans un réacteur de réduction du carbone, à des températures de 1 000°C à 1 800°C, en présence d'une quantité de carbone comprise entre 1,1 et 3 fois la valeur stœchiométrique des oxydes de fer exprimées sous la forme Fe₂O₃ et, facultativement, d'un agent de correction d'indice de basicité et de fusion, destiné à servir de rapport entre les teneurs en calcium et en magnésium exprimées sous la forme CaO et MgO et les teneurs en silicium et en aluminium, exprimées sous la forme SiO₂ et Al₂O₃, à savoir (CaO + MgO)/(SiO₂ + Al₂O₃), avec un développement résultant d'indium, de germanium, de zinc, d'argent, de plomb et, facultativement d'autres métaux sous une forme chimique volatile ;
- la transformation des composés volatils de métaux contenus dans le gaz de dégagement dans des particules solides, ou une poudre, par abaissement de la température des gaz de dégagement et l'ajout facultatif d'un gaz contenant de l'oxygène, et par utilisation d'un système d'abattement, la totalité des particules solides ou des poudres étant un concentré - sensiblement exempt d'oxydes de fer - enrichi en indium, germanium, zinc, argent, plomb et, facultativement en d'autres métaux, sous une forme chimique d'oxydes ou de sulfures, ou de mélanges d'oxydes et de sulfures ;
- une transformation simultanée, par l'effet de la réduction de carbone à une température élevée, des oxydes de fer dans un alliage métallique liquide, avec une composition de la fonte en un acier allié, qui se sépare de la matrice liquide restante se stratifiant dans la partie inférieure du réacteur, et de l'agent de correction d'indice de basicité et de fusion qui se sépare de la matrice liquide restante se stratifiant dans la partie supérieure du réacteur sous la forme d'un laitier liquide sur la base d'aluminosilicates ;
- la collecte de l'alliage de fer liquide placé en dessous et du laitier liquide placé au-dessus au moyen d'effluents gazeux dédiés du réacteur avec une séparation, par conséquent, de l'alliage de fer et du laitier inerte amorphe (vitrifié) ou cristallin (céramisé) selon les procédés de refroidissement du laitier versé ;
- l'envoi du concentré enrichi en indium, germanium, zinc, argent, plomb et, facultativement en d'autres métaux, sous la forme d'oxydes et/ou de sulfures et/ou de mélanges de ceux-ci à des appareils classiques pour une séparation de ces métaux en absence significative de fer, avec leur récupération et leur exploitation ultérieures ;
- l'envoi de l'alliage de fer et du laitier inerte vitrifié/céramisé aux marchés respectifs de référence selon leur qualité.

2. Procédé selon la revendication 1, dans lequel les autres métaux à extraire sont des métaux rares ou des métaux des terres rares.

3. Procédé selon la revendication 1 ou 2, dans lequel le chauffage à 110-510 °C et le chauffage supplémentaire à une température inférieure ou égale à 1350 °C sont réalisés dans un four rotatif ou dans un four à micro-ondes.

4. Procédé selon l'une quelconque des revendications 1 à 3, dans lequel le flux aériforme sortant du four, où le matériau facultativement séché a été chauffé à 110-510 °C, composé principalement d'eau dans son état aériforme, est transporté jusqu'à un système pour une récupération de la chaleur et une condensation.

5. Procédé selon l'une quelconque des revendications précédentes, dans lequel le milieu neutre ou oxydant est obtenu par un gaz choisi dans le groupe comprenant l'azote, l'oxygène, l'air et des combinaisons de ceux-ci.

6. Procédé selon l'une quelconque des revendications précédentes, dans lequel le flux de SOx sortant du réacteur pendant un chauffage à une température inférieure ou égale à 1 350 °C, lorsque le matériau traité contient des boues jarositique ou mixtes provenant d'une lixiviation directe, est utilisé pour la production de l'acide sulfurique.

7. Procédé selon l'une quelconque des revendications précédentes, dans lequel le réacteur pour réaliser le traitement de réduction du carbone est choisi dans le groupe comprenant un réacteur à plasma micro-ondes, un réacteur à plasma à arc thermique non transféré, un réacteur à plasma thermique mixte (arc transféré et arc non transféré), un réacteur EAF et un réacteur à induction.

8. Procédé selon l'une quelconque des revendications précédentes, dans lequel, dans le traitement de réduction du carbone, il est ajouté sous une forme choisie dans le groupe comprenant du charbon végétal, du coke, des résidus contenant des matières plastiques, des gaz contenant du carbone et de l'hydrogène dans leur molécule et des mélanges de ceux-ci.

9. Procédé selon la revendication 8, dans lequel le gaz contenant du carbone et de l'hydrogène dans sa molécule est le méthane.

10. Procédé selon l'une quelconque des revendications précédentes, dans lequel les systèmes de séparation des gaz de dégagement des composés volatils d'indium, de germanium, de zinc, d'argent, de plomb et, facultativement d'autres métaux, sont choisis dans le groupe comprenant des systèmes mécaniques, des systèmes électrostatiques, des systèmes utilisant une membrane filtrante et des systèmes humides de séparation par voie humide.

11. Procédé selon la revendication 10 dans lequel les systèmes mécaniques sont des cyclones et/ou des chambres de séparation, les systèmes électrostatiques sont des filtres électrostatiques, les systèmes utilisant une membrane filtrante sont des filtres physiques poreux et les systèmes par voie humide sont des dépoussiéreurs à voie humide.

12. Procédé selon l'une quelconque des revendications précédentes, dans lequel la séparation de l'alliage liquide de fer, avec une composition chimique de la fonte en acier allié et d'un laitier inerte liquide est réalisée dans un réacteur secondaire.

13. Procédé selon les revendications 1 à 12, dans lequel le chauffage supplémentaire jusqu'à 1350 °C dans un four fermé est réalisé de manière continue dans un « semi-lot » ou dans un « lot ».
